# NEW EUROPEAN PATENT SPECIFICATION

(11) **EP 0 045 988 B2**
(45) Date of publication and mention of the opposition decision: **06.10.1993**
(45) Mention of the grant of the patent: 19.11.1987
(21) Application number: 81200792.0
(22) Date of filing: 08.07.1981
(51) Int. Cl.: B64C 13/34

(54) **Extendible airfoil track assembly**
Führungsschienenanordnung für ausfahrbare Flügelklappen
Assemblage de guide pour ailerons extensibles

(30) Priority: 13.08.1980 US 177675
(43) Date of publication of application: 17.02.1982
(60) Divisional application: 87200084.9
(73) Proprietor: THE BOEING COMPANY, Seattle, Washington 98124-2207 (US)
(72) Inventor: Cole, James Byron, Mercer Island, WA 98040 (US)
(74) Representative: Hoijtink, Reinoud

(56) References cited:
- DE-A- 1 051 025
- DE-A- 2 729 234
- DE-B- 1 274 448
- DE-C- 643 682
- DE-C- 720 038
- DE-C- 748 146
- DE-C- 1 139 388
- GB-A- 463 796
- GB-A- 1 339 331
- GB-C- 619 169
- US-A- 1 611 326
- US-A- 1 914 797
- US-A- 1 917 428
- US-A- 2 298 264
- US-A- 2 346 424
- US-A- 3 089 666
- US-A- 3 834 247
- US-A- 4 158 315
- US-A- 4 286 649
- AIRCRAFT ENGINEERING, vol. 45, no. 11, November 1973, Bunhill Publications Ltd., London, GB. "Development of the family", pages 22-31
- H. Hacder: "Konstruieren und Rechnen" R. C. Schmidt & Co, Braunschweig/Berlin 1962, page 689, sect 102h2, frg2
- Maintenance Manual Trident 3B Section 27-80-01, pages 1 and 2 (October 1974) and Section 27-80-0131, 27-80-0331 and 27-80-0341
- VC10-Series Illustrated Parts Catalogue, various pages
- "The Principles of Aircraft Stressing", W.L. Morse, Charles Griffin & Company, London 1941, pages 1 to 5
- Documentation relation to the F111/F14 fighter of General Dynamics

## Description

The invention relates to a mechanism for extending a high-lift device auxiliary airfoil as defined in the pre-characterizing portion of the claim. By extending the high-lift device the low-speed aerodynamic performance of an airplane during the landing or take-off mode of operation is improved.

A mechanism of the aforementioned kind has been known from US-A-1 917 428. It comprises an arcuate arm which over a first part of its length forms a carrier track guide between upper and lower rollers and over a second portion of its length has gear teeth cut into its upper surface for meshing with a pinion drive gear.

A mechanism of a similar kind is known from US-A-3 089 666. It has a carrier track with a laterally projecting rack portion having gear teeth cut into a lower surface thereof for meshing with a pinion drive gear. In both these prior art mechanisms, because the track is the main support for the aerodynamic loads imposed on the operatively airfoil, any notches or irregularities in the upper or lower surface of the track, such as the gear teeth, set up a notch stress condition that compromises the structural strength and stress safety, which is unacceptable for modern commercial passenger carrying airplanes.

US-A-2 298 264 discloses a mechanism for controlling differential movement of two arms carrying a wing leading edge slat. Each arm comprises a carrier track of I-shaped cross section, on which a toothed section is formed by a length of chain or gear rack fixed at its ends to the vertical web of the track and facing sidewards for lateral engagement by a pinion gear. In all the aforementioned mechanisms the gear rack is not protected against accumulation of dirt or matter which might interfere with the meshing engagement of the pinion, thus presenting a safety hazard.

US-A-2 346 424 shows a rack mechanism comprising a pinion gear in combination with a compound rack member. This mechanism does not comprise a single-piece gear rack. The rack member consists of a slack chain composed of a large number of parts, stiffened by incorporating it into a slotted tube.

An object of the invention is to provide a mechanism of the kind set forth above which does not have the aforementioned disadvantages and can comply with present safety standards. This object is obtained with a mechanism according to the invention as defined in the claim.

In the mechanism according to the invention the carrier track forming the support member does not have notches so that no stress condition is set up. Another advantage is that the carrier track and the gear rack can be of different materials and can be heat- treated differently, so as to provide the optimum hardness and structural strength characteristics for stress safety. The inner facing sides of the interior channel form a raceway for maintaining the pinion drive gear. Also the gear rack teeth are protected from accumulating dirt or material that would jam the gear meshing relationship with the pinion drive gear. By the hat-shaped cross section of the carrier track a high resistance against flexure and collapsing is obtained.

An advantage of positioning the gear rack segment up inside the channel of the support track is that it allows the pinion drive gear to be positioned up higher into the wing cavity and reduces the possibility of protrusion or bulging from the lower surface of the wing to provide clearance.

Another advantage is that the installation of the combination of a slat support track and gear rack segment requires a minimum number of cutouts through the fixed wing leading edge; whereas, with known actuating systems incorporating ball-screws or linear actuators, an additional pair of cutouts is required per slat panel, thereby increasing aerodynamic drag.
FIG. 1 is a plan view of an outboard wing leading edge section with a spanwise series of slat panels.
FIG. 2 is a chordwise cross-sectional view taken along the lines 2-2 of Fig. 1 in the direction indicated and depicts a wing leading edge slat at its fully retracted position whereas it completes the leading edge profile of the wing airfoil section; and this slat position is generally for the cruise flight mode of airplane operation.
FIG. 3 is a view similar to Fig. 2 with the leading edge slat at a forward extended operating position whereat an aerodynamic slot is formed between the leading edge of the fixed wing structure and the trailing edge of the extended slat panel; and this slat position is generally used forthe landing mode of airplane operation.
FIG. 4 is an exploded perspective view of the slat support track and an internally mounted gear rack segment.
FIG. 5 is a sectional view taken along the lines 5-5 of Fig. 2 in the direction indicated.
Fig. 6 is a sectional view taken along the line 6-6 of Fig. 2 in the direction indicated.
FIG. 7 is a lower plan sectional view taken along the lines 7-7 of Fig. 3 in the direction indicated.

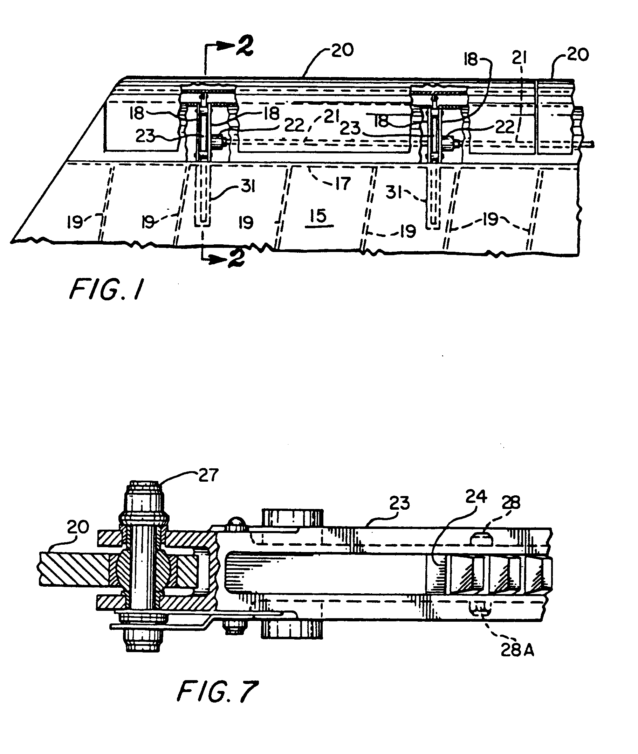

Fig. 1 is a plan view of an outboard, leading edge section of an airplane wing 15 having a front wing spar 17, leading edge ribs 18, main rib members 19 and a spanwise series of slat panels 20 along the wing leading edge. A power drive system is mounted spanwise along the front wing spar 17 for extending or retracting the slat panels 20 relative to a fixed wing leading edge; and comprises: a power drive unit (not shown) such as a hydraulic or electric drive motor for rotating a spanwise series of axially aligned shafts or torque tubes 21, at a relatively high speed. The high speed shafts 21 operate the extension or retraction mechanism of the slat panels 20 through a speed reducer and torque converter unit hereinafter referred to as rotary actuator 22. Each of the rotary actuators 22 is shown mounted adjacent to a pair of wing leading edge ribs 18 which straddle a slat support track 23 having a gear rack segment 24 and pinion drive gear 25 splined to the output drive shaft of the rotary actuator 22. The high speed shafts 21 operate through the rotary actuators 22 and function to controllably tie and synchronize one slat panel to its adjacent slat panel, without any additional slat drive synchronization mechanism being required.

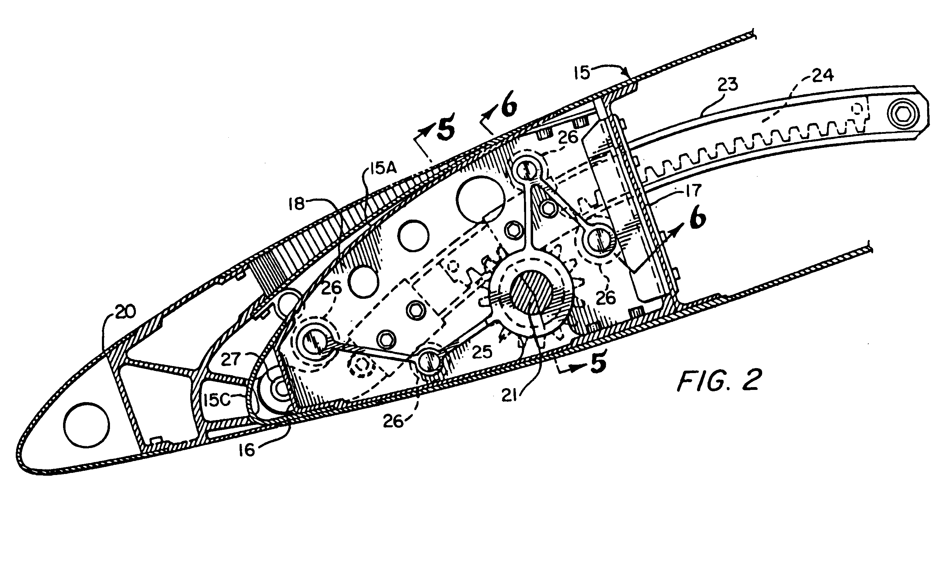

Fig. 2 is a chordwise cross-sectional view taken in the direction indicated by the line 2-2 of Fig. 1 and shows a wing leading edge slat 20 at a fully retracted position whereat it completes the leading edge aerodynamic profile of the wing airfoil section for the cruise flight mode of airplane operation. Due to limited cross-sectional thickness of the airfoil at the location of the spanwise outboard slat panel 20, there is a limited stowage volume for a slat actuating mechanism. However, a preferred embodiment of the present invention, which relates to the combination of a slat support track 23 and a gear rack segment 24 that meshes with a pinion drive gear 25, is capable of being housed completely within the leading edge airfoil section envelope of the wing; and this combination is capable of providing the relatively large amount of travel required for slat panel extension or retraction.

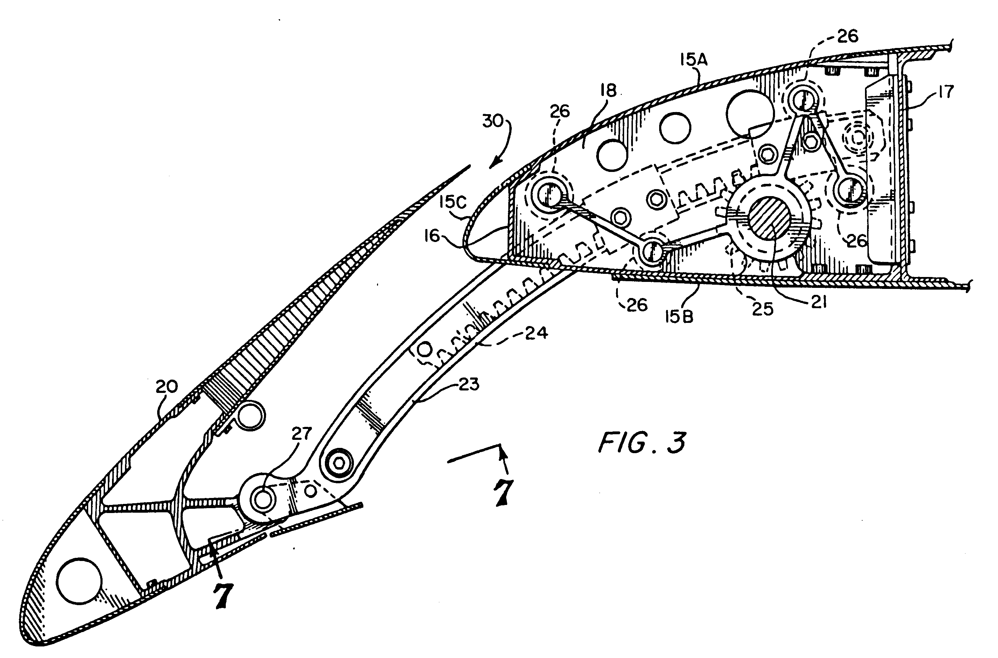

Fig. 3 is a chordwise cross-sectional view similar to Fig. 2 with the slat panel 20 extended, by the preferred embodiment of a track extension mechanism, to a forward operating position; whereat, an aerodynamic slot 30 is formed between the leading edge of the fixed wing structure and the trailing edge of the extended slat panel 20; and this slat position is generally used for the landing mode of airplane operation.

The fixed leading edge section of the wing comprises: an upper surface skin panel 15A, a lower surface skin panel 15B, and the upper and lower skin panels 15A and 15B are attached to a rigid leading edge nose structure 15C having a spanwise nose beam 16; and this entire structure is supported by chordwise wing ribs 18 which are fixedly attached to a spanwise structural member such as the front wing spar 17.

Each individual slat panel 20 is supported in the extended operating position shown in Fig. 3 by the curved track 23 which is mounted on rollers 26 having their rotational axis fixed to the wing rib 18. These curved slat support tracks 23 are main carrier tracks for the slat panels 20.

The forward end of these tracks 23 is pivotally connected at 27 to the slat panels 20; and the arcuate extension or retraction motion of the main carrier tracks 23 is about a theoretical center-of-rotation (not shown). There are two spanwise spaced main carrier tracks 23 for support of each individual slat panel 20; and the tracks 23 need not be located as shown in Fig. 1, but they could be located at the ends of the slat panel 20 or spaced spanwise apart at an optimum structural distance of approximately one-fourth of the length of a slat panel 20. When the slat panel 20 is in the fully retracted position shown in Fig. 2, the main carrier tracks 23 protrude aft through a small opening in the front wing spar 17 and this protrusion of the track, has a fluid tight enclosure 31, shown in Fig. 1, because the interior of the wing is usually a fuel bay area.

Each individual slat panel 20 is supported in the extended position shown in Fig. 3 by the curved track 23 having an internally mounted gear rack segment 24 which engages the pinion drive gear 25.

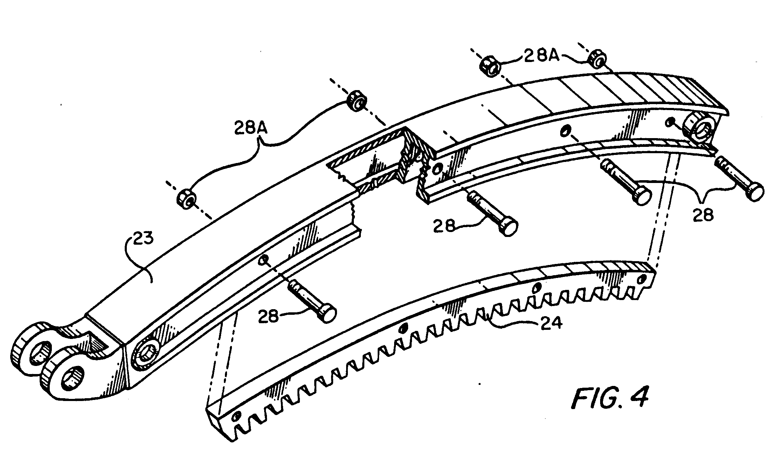

Fig. 4 is an exploded perspective view of the slat support track 23 having a gear rack segment 24 as a separate element, fastened within the channel of the hat-shaped cross section of the track by bolts 28 and nuts 28A. The gear rack segment 24 is not made integral with the support track 23; and each of them: is of a different material, is heat treated differently, and has a different hardness and strength characteristic. The support track material is a 4340 MOD high heat treat alloy steel, high heat treated to 270-300 ksi (1860-2070 MPa). Further, it is desirable to keep them as separate elements; because, the root of the gear tooth profile is more susceptible to crack propagation when subjected to high tension stresses. From a safety stand-point, it would be better if the fracture were isolated to the gear rack segment 24 as opposed to the slat support track 23. The present configuration, isolates the gear rack segment 24 from the high tension stresses imposed on the outer fibers of the track 23 lower surface; and this arrangement not only reduces the possibility of fatigue cracking, but if such cracks were to develop they would be isolated from the slat support track 23 and not contribute to its failure. There are several fasteners 28, 28A, holding the gear rack segment 24 within the channel of the slat support track 23 and even if a section of the gear rack segment 24 were to fail through fracture, it may still remain fastened in place and continue to operate satisfactorily. However, if the gear teeth were machined in the lower surface of the slat support track 23 and if any crack stress propagation were to take place, then because the track 23 is the primary aerodynamic load support memberforthe slat panel 20, the safety of the aircraft would be compromised. For these reasons, it would be undesirable to make these two elements integral.

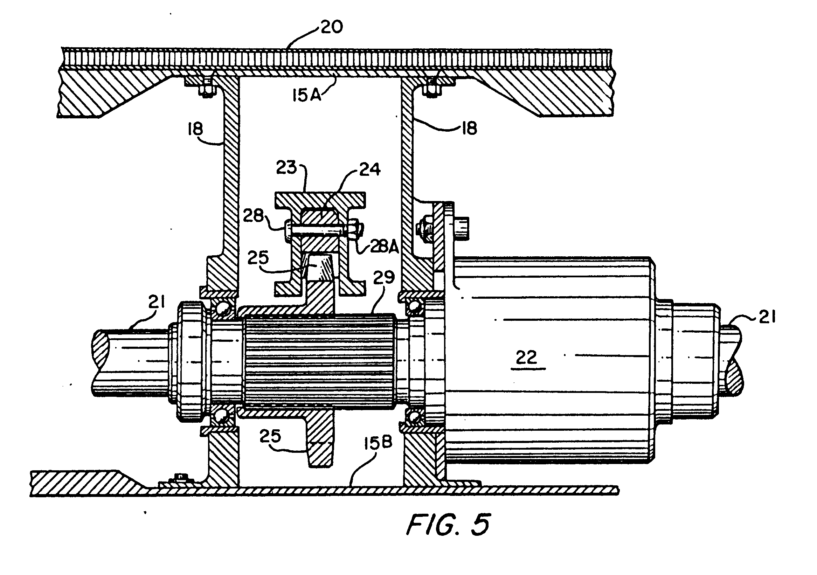

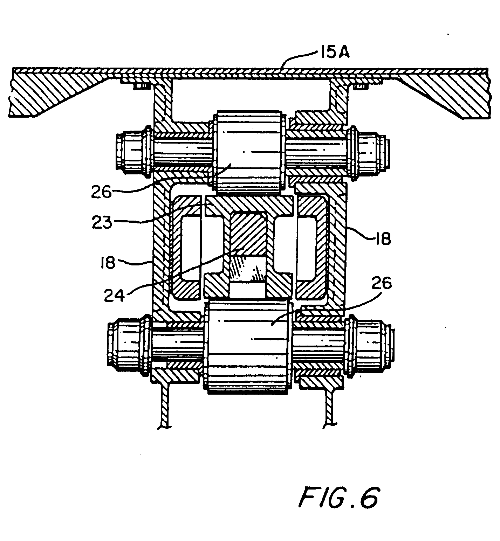

Figs. 5, 6, and 7 are sectional views taken along the lines 5-5, 6-6, and 7-7 respectively of Figs. 2 and 3.

Referring to Figs. 1 and 5, the drive gear25, track 23 and rollers 26 are centered spanwise between a pair of wing ribs 18 which provide a structurally straddled support. The axially aligned series of high speed shafts 21 rotate within the approximate range of 600 to 1,000 r.p.m. and go into and through actuators 22 which comprise a planetary gear mechanism of about a 200:1 reduction ratio and which rotate a splined output sleeve 29 at a relatively slow rate of speed. The actuator output sleeve 29 is splined to drive gear 25 which meshes with gear rack segment 24 to extend or retract the slat panel 20. The spanwise series of high speed shafts 21 function to synchronize the extension or retraction sequence of the spanwise series of slat panels 20.

One of the problems in getting maximum extension travel of a slat panel, from the fixed leading edge portion of a wing, is that as the cross-sectional thickness of a wing airfoil section decreases, it becomes more and more difficult to design a simple slat actuating mechanism that will: operatively extend a slat panel to the distance shown in Fig. 3; function satisfactorily throughout the complete extension and retraction cycle; and still be capable of being stowed within the wing cavity area as shown in Fig. 2. It is conceivable that a ball-screw jack or a linear actuator, with one end pivotally connected to the slat panel and the other end connected to the front wing spar, as in generally known slat extension systems, could be used to produce a maximum slat extension similar to the present invention; however, the distance between the wing leading edge 15C and the front spar 17 is a fixed amount which limits the length of a linear actuator. This distance is usually inadequate for maximum extension even when the attachment points are located as far forward in the slat nose structure, and as faraft against the front spar 15 as possible. When this is done, the design is further compromised because the actuator attachments have poor accessibility and complicate the slat and spar structures. To obtain maximum extension usually requires a telescoping type of actuator, i.e., a screw within a screw or a cylinder within a cylinder. These devices are heavier, more costly and less reliable than conventional units. In contrast, maximum extension is no problem with a rack and pinion gear drive since the rotation of the pinion gear is unlimited and the gear rack may be extended to the full length of the support track. Another disadvantage of using linear actuators is the weight and cost of additional attachment fittings which must be incorporated in the slat and fixed leading edge structures to mount each actuator. Further, it will also be evident that a substantial cutout will have to be made in the undersurface of the fixed leading edge portion of the wing for clearance of said-actuators and that these cutouts will have to be in addition to those made for the set of slat support tracks and the set of programming tracks or mechanism, because a typical extension system for a single slat panel generally requires: a set of support tracks; a set of programming members; and a set of actuation members such as ball-screws or linear actuators. Also, for each of these slat extension sets, it is generally necessary to provide a pair of wing ribs for structural support. These cutouts in the fixed leading edge cause an irregularity from an aerodynamic airflow standpoint because they disrupt the airflow through the areodynamic slot shown in Fig. 3.

Further, referring to Figs. 2 to 5, it will be noted that the gear rack segment 24 is located up inside the channel of the slat support track 23 and this allows the drive gear 25 to be raised up higher into the wing cavity so that it will not protrude below the lower surface of the wing. Referring to the outboard slat panel 20 shown in the plan view of Fig. 1, because wings generally taper in plan-form and thickness toward the tip, the airfoil cross-sectional area forward of the front wing spar 17, in generally known slat extension systems, is such that there is insufficient area for installing said known systems and still be capable of producing the amount of slat travel or extension distance of the present invention, without extreme complexity.

The slat support track has to fit within the cross-sectional contour area of the wing airfoil section and there has to be a certain amount of space left at the top of the wing cavity for structural support material. Also, in order to aerodynamically program the slat panel extension positions, a certain amount of space, both above and below the track, is necessary for properly locating and mounting the rollers that support the track. The operating positions of the slat panel, for producing satisfactory aerodynamic characteristics, substantially determines the location of the track and rollers; and in most cases, the track will be positioned closer to the upper surface of the wing because of the curvature of the track which follows the upper surface curvature. Therefore, the largest space that remains in the airfoil envelope for locating an actuating mechanism is that area between the track and the lower surface of the wing. Even though this is the largest remaining area for placement of an actuating mechanism it is still critical in depth because the most outboard airfoil cross-sectional contour, at the location of the outboard slat panel, is quite slender in comparison to an inboard slat panel location where it is quite thick. Therefore a close relationship between the center line of the track and axis of the drive gear, as shown in the present invention, is important since it provides a minimum depth actuator envelope for fitting the drive combination within the critical outboard cross-sectional area.

Referring to Figs. 2 and 3, it can be seen that if the drive gear 25 had to engage gear teeth that were on the undersurface of the slat support track 23, the drive gear would have to be lowered and would possibly protrude from the lower surface of the wing. This happens because of the added dimension of the gear rack teeth on the undersurface of the slat support track, the wing cavity area is reduced in size, making it almost impossible to house a drive gear of the prop- ersize and still have sufficient structure remaining on the wing rib for adequately supporting the power drive system. Therefore, by the method of combined construction of slat support track of the present invention, i.e., the cross-sectional hat-shape construction of track member 23 with a separate and internally mounted gear rack segment 24, a mechanical utilization is made of the track member which is relied upon primarily for the main structural support of the slat panel.

## Claims

1. Mechanism for extending a wing leading edge slat high-lift device (2) relative to a main airfoil (15), comprising:
a carrier track (23) connected to said high-lift device, extending substantially chordwise of said main airfoil and comprising a toothed section;
guide means secured to said main airfoil and comprising upper and lower rollers (26) in contact with upper and lower surfaces of said carrier track (23) for support thereof;
a pinion gear (25) adapted to gear in meshing engagement with said toothed section for extending and retracting the high-lift device, said pinion gear (25) being located spanwise between a pair of wing ribs (18) providing a structurally straddled support for said pinion gear (25),
characterized in that
a) the carrier track (23) has a hat-shaped cross section, namely an inverted U-shaped cross section defining a downwardly facing channel along the length thereof, each of the vertical webs of the channel being formed with an outwardly extending flange at its lower edge;
b) said toothed section is formed by a single-piece gear rack (24) formed separately of said carrier track (23) and mounted within said channel with its gear teeth facing downwardly and fixed by several spaced apart fasteners (28, 28A) passing through both vertical webs of said carrier track (23) and through said gear rack (24) above said teeth;
c) the depth of the channel is greaterthan the height of the gear rack (24) and the gear rack is located entirely up inside the channel so that the inner facing sides of the channel protect the gear rack teeth from dirt or material that would jam the gear meshing relationship with the pinion gear (25); and
d) said upper and lower rollers (26) are in contact respectively with the cross member of said inverted U-shaped carrier track (23) and the lower surface of both outwardly extending flanges thereof and are located spanwise between said pair of wing ribs (18), which provide a structurally straddled support for said rollers (26).

## Patentansprüche

1. Mechanismus zum Ausfahren einer Flügelvorderkanten-Vorflügel-Hochauftriebseinrichtung (2) relativ zu einem Hauptflügel (15), umfassend: eine mit der Hochauftriebseinrichtung verbundene Trägerschiene (23), die sich im wesentlichen profilsehnenweise bezüglich des Hauptflügels erstreckt und einen gezahnten Abschnitt umfaßt; Führungsmittel, die an dem Hauptflügel befestigt sind und obere und untere Rollen (26) in Kontakt mit der oberen und unteren Oberfläche der Trägerschiene (23) zum Halten derselben sind; ein Antriebszahnrad (25), das dazu geeignet ist, zum Ausfahren und Einfahren der Hochauftriebseinrichtung in kämmenden Eingriff in dem gezahnten Abschnitt einzugreifen, wobei sich das Antriebszahnrad (25) spannweitenweise zwischen einem Paar von Flügelrippen (18) befindet, die einen strukturell eingabeinden Halter Lagerung für das Antriebszahnrad (25) vorsehen; dadurch gekennzeichnet, daß
a) die Trägerschiene (23) einen hutförmigen Querschnitt hat, nämlich einen umgekehrt U-förmigen Querschnitt, der einen nach abwärts gerichteten Kanal entlang der Länge derselben definiert, wobei jeder der vertikalen Stege des Kanals mit einem sich nach auswärts erstreckenden Flansch an seinem unteren Rand ausgebildet ist;
b) der gezahnte Abschnitt von einer Einstück-Zahnstange (24) gebildet ist, die separat von der Trägerschiene (23) ausgebildet und innerhalb des Kanals mit ihren Verzahnungszähnen nach abwärts gewandt angebracht und mittels mehrerer voneinander beabstandeter Befestigungselemente (28, 28A), welche sowohl durch die vertikalen Stege der Trägerschiene (23) als auch durch die Zahnstange (24) oberhalb der Zähne hindurchgehen, befestigt ist;
c) die Tiefe des Kanals größer als die Höhe der Zahnstange (24) ist und sich die Zahnstange vollständig aufwärts innerhalb des Kanals befindet, so daß die inneren zugekehrten Seiten des Kanals die Zahnstangenzähne vor Schmutz oder Material, welches die Zahnkämmbeziehung mit dem Antriebszahnrad (25) stören würde, schützen; und
d) die oberen und unteren Rollen (26) jeweils mit dem Querteil der umgekehrt U-förmigen Trägerschiene (23) und der unteren Oberfläche von beiden sich nach auswärts erstreckenden Flanschen derselben in Kontakt sind und sich spannweitenweise zwischen dem Paar von Flügelrippen (18), welche einen strukturell eingabeinden Halter für die Rollen (26) vorsehen, befinden.

## Revendications

1. Mécanisme destiné à faire avancer un dispositif (2) d'augmentation de portance à volet de bord d'attaque de voilure par rapport à un plan aérodynamique principal (15), comprenant :
une voie (23) de déplacement raccordée au dispositif d'augmentation de portance, disposée pratiquement suivant la corde du plan aérodynamique principal et comprenant un tronçon denté,
un dispositif de guidage fixé au plan aérodynamique principal et comprenant des rouleaux supérieur et inférieur (26) qui sont au contact des faces supérieure et inférieure de la voie de déplacement (23) afin qu'ils la supportent, et
un pignon (25) destiné à être en prise avec le tronçon denté afin qu'il fasse avancer et reculer le dispositif d'augmentation de portance, le pignon (25) étant disposé dans la direction de l'envergure entre une paire de nervures (18) de la voilure formant un support chevauchant et résistant pour le pignon (25),
caractérisé en ce que
a) la voie de déplacement (23) a une section en forme de chapeau, c'est-à-dire une section en U retourné délimitant un canal tourné vers le bas suivant sa longueur, chacune des joues verticales du canal étant formée avec un flasque tourné vers l'extérieur à son bord inférieur,
b) le tronçon denté est formé par une crémaillère (24) en une seule pièce formée afin qu'elle soit séparée de la voie de déplacement (23) et montée à l'intérieur du canal avec ses dents d'engrenage tournées vers le bas et fixées par plusieurs organes distants de fixation (28, 28A) passant à travers les joues verticales de la voie de déplacement (23) et de la crémaillère (24) au-dessus des dents,
c) la profondeur du canal est supérieure à la hauteur de la crémaillère (24) et la crémaillère est placée entièrement à l'intérieur du canal afin que les côtés tournés vers l'intérieur du canal protègent les dents de la crémaillère contre la saleté et les matières qui pourraient perturber l'engrènement avec le pignon (25), et
d) les rouleaux supérieur et inférieur (26) sont respectivement au contact de l'organe transversal de la voie de déplacement (23) en U retourné et de la surface inférieure de ses flasques dépassant vers l'extérieur, et ils sont disposés dans la direction de l'envergure entre la paire de nervures (18) de la voilure qui forment un support chevauchant résistant pour les rouleaux (26).
